# EUROPÄISCHE PATENTANMELDUNG

(11) **EP 1 927 428 A1**
(43) Veröffentlichungstag der Anmeldung: **04.06.2008**
(21) Anmeldenummer: 06023664.3
(22) Anmeldetag: 14.11.2006
(51) Int. Cl.: B23Q 3/06, B23P 15/02, B24B 41/06, B21D 53/78

(54) **Verfahren zur Herstellung einer Turbinenschaufel**

(71) Anmelder: SIEMENS AKTIENGESELLSCHAFT, 80333 München (DE)
(72) Erfinder: Blomeyer, Malte, Dr., 45472 Mühlheim an der Ruhr (DE); Krause, Stefan, 47803 Krefeld (DE)

(57) **Zusammenfassung**

Verfahren zur Herstellung einer Turbinenschaufel mit einem Schaufelfuß und einem Schaufelblatt, bei dem ein Rohling der Turbinenschaufel gegossen wird, der Rohling mit seinem Schaufelblatt in einer Halterung positioniert und fixiert und die Endgeometrie des Schaufelfußes durch Materialabtrag ausgebildet wird, wobei vor und/oder während der Ausbildung der Endgeometrie des Schaufelfußes die Ist-Form des Schaufelblattes ermittelt und bei einer Abweichung von einer Soll-Form die Position des Schaufelblatts in der Halterung angepasst wird.

## Beschreibung

Die vorliegende Erfindung betrifft ein Verfahren zur Herstellung einer Turbinenschaufel mit einem Schaufelfuß und einem Schaufelblatt, bei dem ein Rohling der Turbinenschaufel gegossen wird, der Rohling mit seinem Schaufelblatt in einer Halterung positioniert und fixiert und die Endgeometrie des Schaufelfußes durch Materialabtrag ausgebildet wird.

Weiterhin betrifft die Erfindung eine Halterung mit Positionierelementen und/oder Spanneinrichtungen, um ein Schaufelblatt einer Turbinenschaufel zu positionieren und in der Lage zu fixieren.

Die Herstellung von Turbinenschaufeln ist im Stand der Technik bekannt. Dazu wird in einem ersten Schritt ein Rohling der Turbinenschaufel gegossen. Anschließend wird das Schaufelblatt des Rohlings in einer Halterung fixiert und die Endgeometrie des Schaufelfußes unter Materialabtrag, beispielsweise durch Schleifen, ausgebildet. Die bekannten Halterungen weisen Positionierelemente und/oder Spanneinrichtungen auf, mit deren Hilfe das Schaufelblatt in der Halterung fixiert wird.

Allerdings treten beim Guss und der nachfolgenden Oberflächenbearbeitung des Rohlings maßliche und metallurgische Abweichungen auf. Als Folge wird das Schaufelblatt in der Halterung so positioniert, dass der Schaufelfuß in eine abweichende Stellung kommt. Diese Fehlanordnung führt bei der Bearbeitung des Schaufelfußes dazu, dass die hergestellte Fuß-Blatt-Stellung große Toleranzen hat.

Der Schaufelfuß ist die Schnittstelle zu dem Rotor bzw. dem Gehäuse der Turbine und legt daher die räumliche Lage des Schaufelblattes in der Turbine fest. Wenn die Endstellung des Schaufelfußes zum Schaufelblatt fehlerhaft ist, wird die Turbinenschaufel in der Turbine schief befestigt, wodurch der Abströmwinkel aus der Schaufelpassage negativ beeinflusst wird. Eine Folge ist ein Wirkungsgradverlust.

Aufgabe der vorliegenden Erfindung ist es, ein Verfahren und eine Halterung der oben genannten Art so auszubilden, dass eine Turbinenschaufel mit einer hohen Genauigkeit hergestellt werden kann.

Diese Aufgabe wird bei einem Verfahren der eingangs genannten Art dadurch gelöst, dass vor und/oder während der Ausbildung der Endgeometrie die Ist-Form des Schaufelblattes ermittelt und bei einer Abweichung von einer Soll-Form die Position des Schaufelblatts in der Halterung angepasst wird.

In anderen Worten wird also vor und/oder während der Ausbildung der Endgeometrie des Schaufelfußes die Ist-Form des Schaufelblattes ermittelt. Diese wird mit einer Soll-Form verglichen, wobei eventuelle Abweichungen bestimmt werden. Wenn eine Abweichung festgestellt wurde, wird die Position des Schaufelblattes in der Halterung derart korrigiert, dass die Endposition des Schaufelfußes unabhängig von den Abweichungen korrekt, d.h. gemäß den vorgegebenen Spezifikationen der Turbinenschaufel, ausgebildet wird.

Weiterhin wird die obige Aufgabe bei einer Halterung der eingangs genannten Art dadurch gelöst, dass die Positionierelemente und/oder Spanneinrichtungen verstellbar sind, so dass die Spannposition der Turbinenschaufel justierbar ist.

Da die Positionierelemente und/oder Spanneinrichtungen verstellbar ausgebildet sind, ist es möglich, die Position des Schaufelblattes und damit auch die Position der Turbinenschaufel als ganzes zu verändern und damit die Turbinenschaufel in einer gewünschten Lage zu fixieren.

Gemäß einer bevorzugten Ausführungsform ist vorgesehen, dass die Halterung zusätzlich eine Steuereinheit aufweist. Diese ist ausgebildet, die Ist-Form des Schaufelblattes zu ermitteln, sie mit einer Soll-Form zu vergleichen und bei einer Abweichung die Positionierelemente und/oder die Spanneinrichtungen automatisch zu betätigen. Damit ist es möglich, die Position der Turbinenschaufel in der Halterung automatisch zu bestimmen und zu justieren.

Die Erfindung wird im Folgenden an Hand eines Ausführungsbeispiels mit Bezug auf die Zeichnungen näher erläutert.

In den Figuren zeigen:
- Figur 1: eine schematische Darstellung eines Rohlings einer Turbinenschaufel, der in einer Halterung fehlangeordnet fixiert ist,
- Figur 2: eine schematische Darstellung einer Turbinenschaufel, die aus dem Rohling gemäß Figur 1 durch Materialabtrag hergestellt wurde,
- Figur 3: eine schematische Darstellung des Rohlings gemäß Figur 1, dessen Position in der Halterung angepasst ist,
- Figur 4: eine schematische Darstellung der Turbinenschaufel, die aus dem Rohling gemäß Figur 3 durch Materialabtrag hergestellt wurde,
- Figur 5: eine schematische Darstellung eines weiteren Rohlings einer Turbinenschaufel, der in der Halterung fehlangeordnet fixiert ist,
- Figur 6: eine schematische Darstellung einer Turbinenschaufel, die aus dem Rohling gemäß Figur 5 durch Materialabtrag hergestellt wurde,
- Figur 7: eine schematische Darstellung des Rohlings gemäß Figur 5, dessen Position in der Halterung angepasst ist, und
- Figur 8: eine schematische Darstellung einer Turbinenschaufel, die aus dem Rohling gemäß Figur 7 durch Materialabtrag hergestellt wurde.

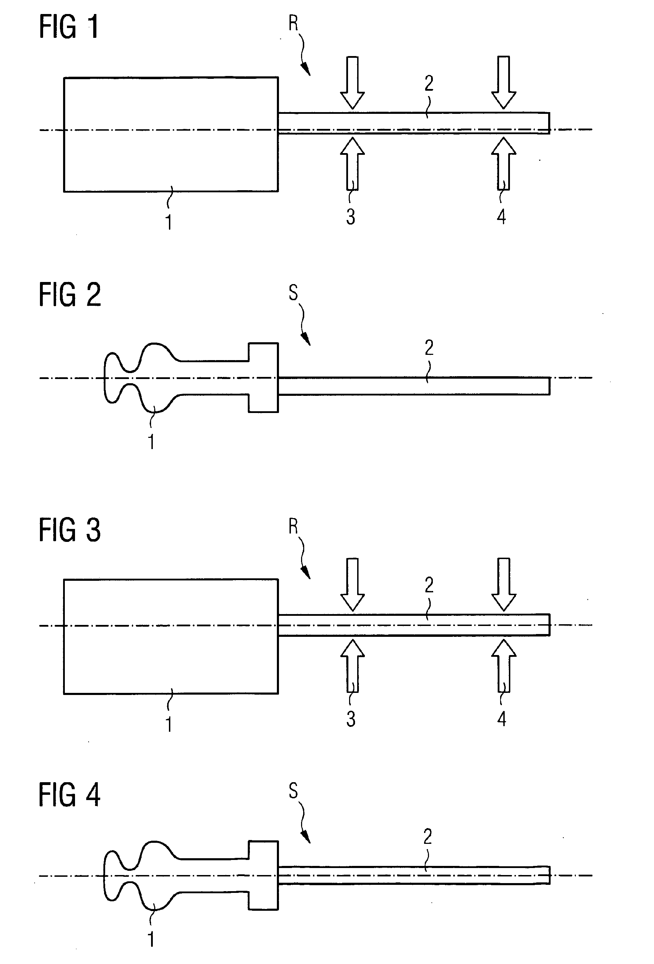

In der Figur 1 ist schematisch ein Rohling R einer Turbinenschaufel gezeigt. Dieser ist im Feingussverfahren, welches an sich im Stand der Technik bekannt ist, hergestellt worden und weist einen Schaufelfuß 1 und ein damit verbundenes Schaufelblatt 2 auf. Der Rohling R weicht in seiner Geometrie von den Vorgaben ab, da das Schaufelblatt 2 z.B. durch Fehlmaterial nicht zentriert an dem Schaufelfußes 1 ausgebildet, sondern in der Zeichnung nach oben versetzt ist.

Zur Bearbeitung des Schaufelfußes ist das Schaufelblatt 2 des Rohlings R in einer Halterung positionierbar eingespannt, wobei zwei Spanneinrichtungen 3, 4 der Halterung schematisch dargestellt sind. Der Rohling R ist hier fehlangeordnet, d.h. zu hoch eingespannt.

Die Endgeometrie des Schaufelfußes 1 wird im eingespannten Zustand durch Materialabtrag, hier durch Schleifen, ausgebildet.

Die Figur 2 zeigt eine Turbinenschaufel S, die aus dem in Figur 1 gezeigten Rohling R durch Materialabtrag hergestellt wurde. Dabei hat die Abweichung der Geometrie des Schaufelblattes 2 dazu geführt, dass der Rohling R fehlerhaft in der Halterung eingespannt wurde. Auf Grund dieser Fehlanordnung wurde der Schaufelfuß 1 der Turbinenschaufel S relativ zu dem Schaufelblatt 2 zu hoch ausgebildet.

Die Figur 3 zeigt den Rohling R gemäß Figur 1, dessen Position R in der Halterung angepasst ist. Dazu wurde die Ist-Form des Schaufelblattes 2 bestimmt und mit einer Soll-Form verglichen. Hierbei ist die oben beschriebene Abweichung bezüglich der Anordnung des Schaufelblatts 2 auf dem Schaufelfuß 1 festgestellt worden. Entsprechend dieser Abweichung wurde dann die Position des Schaufelblatts 2 in der Halterung verändert, indem die Spanneinrichtungen 3, 4 justiert wurden. Dazu wurden die Spanneinrichtungen 3, 4 in der Zeichnung nach unten bewegt, so dass der Rohling R insgesamt tiefer eingespannt ist.

Die Figur 4 zeigt die Turbinenschaufel S, welche aus dem gemäß Figur 3 eingespannten Rohling R durch Materialabtrag hergestellt wurde. Diese weist keine wesentlichen Abweichungen von der vorgesehenen Geometrie auf.

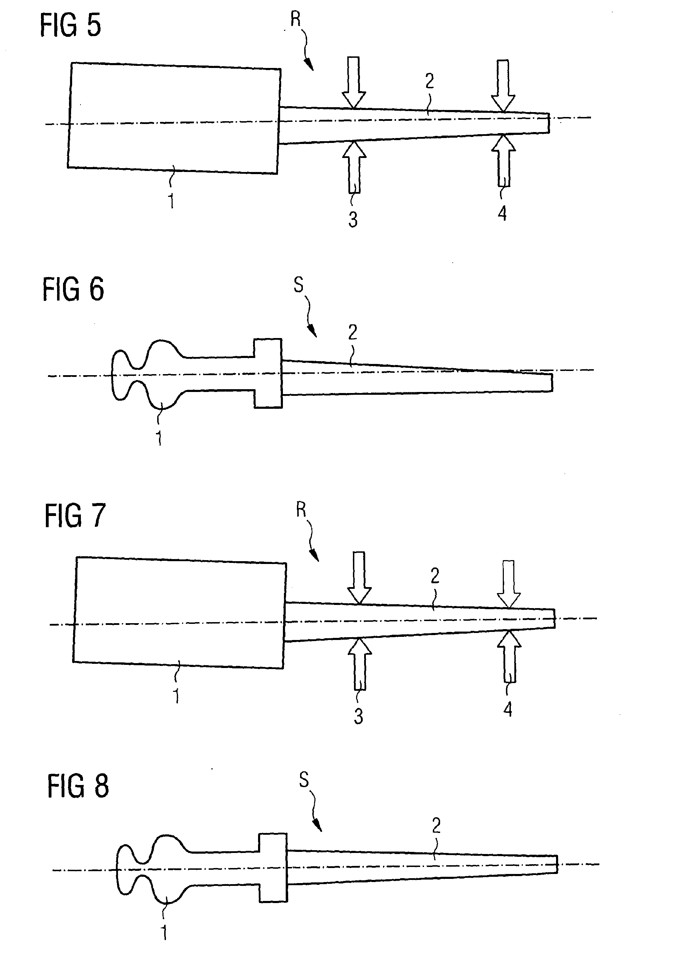

In den Figuren 5 bis 8 sind in analoger Weise zu den Figuren 1 bis 4 ein weiterer fehlerhaft ausgebildeter Rohling R und die daraus hergestellte Turbinenschaufeln S gezeigt.

Bei dem Rohling R ist das Schaufelblatt 2 schief mit dem Schaufelfuß 1 verbunden. In der Figur 5 ist gezeigt, wie der Rohling R in der Halterung ohne eine Anpassung der Position der Spanneinrichtungen 3, 4 fixiert ist.

Wenn die Ausbildung der Endgeometrie des Schaufelfußes 1 vorgenommen wird, während der Rohling derart in der Halterung eingespannt ist, erhält man die in der Figur 6 gezeigte fehlausgebildete Turbinenschaufel S.

Die Fehlstellung des Rohlings R in der Halterung wird erfindungsgemäß ebenfalls durch ein Justieren der Spanneinrichtungen 3, 4 ausgeglichen, indem die Spanneinrichtung 4 in der Zeichnung und relativ zu der Spanneinrichtung 3 nach oben verschoben wird. Hierdurch kann die Turbinenschaufel S ohne wesentliche Abweichung von der gewünschten Geometrie durch Materialabtrag aus dem Rohling R ausgebildet werden.

Die verwendete Halterung kann eine Steuereinheit aufweisen, die ausgebildet ist, die Ist-Form des Schaufelblattes zu bestimmen, diese mit einer Soll-Form zu vergleichen und bei einer Abweichung die Positionierelemente automatisch zu betätigen.

## Patentansprüche

1. Verfahren zur Herstellung einer Turbinenschaufel (S) mit einem Schaufelfuß (1) und einem Schaufelblatt (2),
bei dem ein Rohling (R) der Turbinenschaufel (S) gegossen wird,
der Rohling (R) mit seinem Schaufelblatt (2) in einer Halterung positioniert und fixiert und
die Endgeometrie des Schaufelfußes (1) durch Materialabtrag ausgebildet wird,
**dadurch gekennzeichnet, dass**
vor und/oder während der Ausbildung der Endgeometrie des Schaufelfußes (1) die Ist-Form des Schaufelblattes (2) ermittelt und bei einer Abweichung von einer Soll-Form die Position des Schaufelblatts (2) in der Halterung angepasst wird.

2. Halterung mit Positionierelementen und/oder Spanneinrichtungen (3, 4),
um ein Schaufelblatt (2) einer Turbinenschaufel (S) für eine Bearbeitung des Schaufelfußes (2) der Turbinenschaufel zu positionieren und in der Lage zu fixieren,
**dadurch gekennzeichnet, dass**
die Positionierelemente und/oder Spanneinrichtungen (3, 4) verstellbar sind, so dass die Spannposition der Turbinenschaufel (S) justierbar ist.

3. Halterung nach Anspruch 2,
**dadurch gekennzeichnet, dass**
sie eine Steuereinheit aufweist, die ausgebildet ist, die Ist-Form des Schaufelblattes (2) zu ermitteln, diese mit einer Soll-Form zu vergleichen und bei einer Abweichung die Positionierelemente und/oder die Spanneinrichtungen (3, 4) automatisch zu betätigen.
